# EUROPEAN PATENT SPECIFICATION

(11) **EP 4 552 816 B1**
(45) Date of publication and mention of the grant of the patent: **13.05.2026**
(21) Application number: 23383136.1
(22) Date of filing: 07.11.2023
(51) Int. Cl.: B29C 33/48, B29C 70/34, B29C 70/30, B29C 70/46, B29D 99/00, B64C 1/06, B64C 1/00, B64C 3/18

(54) **METHOD OF MANUFACTURING Y-SHAPED STRINGERS AND DOUBLE Y-SHAPED SPARS MADE OF COMPOSITE MATERIAL**
VERFAHREN ZUR HERSTELLUNG VON Y-FÖRMIGEN HOLMEN UND DOPPEL Y-FÖRMIGE HOLME AUS VERBUNDWERKSTOFF
PROCÉDÉ DE FABRICATION DE LISSES EN FORME DE Y ET LISSES EN FORME DE Y DOUBLE EN MATÉRIAU COMPOSITE

(43) Date of publication of application: 14.05.2025
(73) Proprietor: AIRBUS OPERATIONS, S.L.U., 28906 Getafe, Madrid (ES)
(72) Inventor: JARA RODELGO, Alvaro, 28906 GETAFE (Madrid) (ES); GONZALEZ ANTOHI, Miguel, 28906 GETAFE (Madrid) (ES); DE LA PUERTA VALLEJO, Mikel, 28906 GETAFE (Madrid) (ES)
(74) Representative: Herrero & Asociados, S.L.

(56) References cited:
- FR-A- 575 732
- GB-A- 128 322
- US-A- 2 395 205
- US-A1- 2015 183 503
- US-A1- 2020 353 708
- US-B1- 6 237 873
- ALDERLIESTEN R. C.: "Introduction to Aerospace Engineering - Lecture slides", 22 November 2011 (2011-11-22), pages 1 - 26, XP093144110, Retrieved from the Internet <URL:https://ocw.tudelft.nl/wp-content/uploads/AE1102_Structures_Slides_3.pdf> [retrieved on 20240321]

## Description

### Object of the invention

The present invention refers to method of manufacturing stringers and spars made of composite material, particularly stringers used in the aerospace industry having a Y-shape and spars having a double Y-shape cross-section.

The stringers according to the present invention can be applied as stiffeners in any part of the airframe of the aircraft.

The spars according to the present invention can be used as spars for the airframe of the aircraft, in particular, for torsion boxes of the aircraft.

### Background of the invention

CA2619767A1 relates to a stringer which is made from a composite material, and which is used to stiffen composite panels, particularly those used in the aeronautical industry. The stringer is formed by a base which is used to join the same to the panel and a structural element which is equipped with a structural reinforcement at the end opposite the base, said structural reinforcement being made from high-modulus unidirectional fibers of the same material as the stringer or of another compatible material.

The existing "double T"-section and the "omega"-section stringers have a limited momentum of inertia, and may suffer from buckling and post-buckling, as well as from torsional behavior. Furthermore, other manufacturing requirements such as weight savings and cost savings are beneficial to improve the existing stringers.

EP3095691A1 relates to a multi-spar torsion box structure comprising a plurality of spars of composite material arranged to form a multi-cell structure with two or more cells extending span-wise one after the other in the torsion box, and upper and lower skin covers of composite material respectively joined to upper and lower surfaces of the multi-cell structure.

The existing "double T"-section and the "omega"-section spars used in multi-spar torsion box structures have a limited momentum of inertia, and may suffer from buckling and post-buckling, as well as from torsional behavior. Furthermore, other manufacturing requirements such as weight savings and cost savings are beneficial to improve the existing spars and torsion boxes.

The present invention satisfies these demands and solves the drawbacks of the current existing stringers used as stiffeners and spars used in multi-spar torsion box structures.

US2015183503A1 relates to a manufacturing method is disclosed for manufacturing of a composite stiffening element, including: arranging composite laminates partially between caul plates and mold halves, and partially between a movable upper sandwich plate and a movable lower sandwich plate, moving the upper and lower sandwich plates together and moving the assembly formed by the first caul plate and the first mold half and the assembly formed by the second caul plate and the second mold half, and joining and co-curing the composite laminates to make up the composite stiffening element. A composite stiffening element is also disclosed.

### Description of the invention

The present invention proposes a first manufacturing method to obtain a composite material stringer (carbon fiber or glass fiber with thermoset or thermoplastic resin) that can be used as stiffener for (preferably composite) panels formed by joining the base or flanges of the stringer and the panel. The proposed stringer comprises a structural cross-section that has a shape in Y. This shape is specified in the present description as a Y-shape and can correspond to the total or a part of the structural cross-section. The proposed stringer is indicated in the present description as a Y-shaped stringer. The Y-shaped stringer according to the present invention comprises two structural elements: an opened triangular-shaped cross-section structure followed by a stringer web that provides a Y-shape. The Y-shaped or Y-section stringer made of composite material has various benefits such as better structural efficiency, less wrinkles when manufacturing due to high angles, no corrosion and better Non-Destructive Testing, NDT process.

The Y-shaped stringer can have various shapes and can comprise vertical fins and a cap with different variations. The use of composite materials for this purpose enhances the actual stringer properties, as well as the inspections and repairability. The Y-shaped stringer according to the present invention provides an optimization of the "double T"-section and the "omega"-section stringers existing in the art. Advantageously, the proposed Y-shaped stringer increases the momentum of inertia, enhances the buckling and post-buckling behavior, as well as the torsional behavior, and provides a new shape been resulting in the most efficient of the shapes. Furthermore, the Y-section optimizes the disposition of stringers due to the wider effective surface of the feet, which implies weight savings, cost savings and a higher ROI.

Furthermore, the present invention proposes another manufacturing method to obtain a double Y-shaped cross-section spar by connecting two Y-shaped stringers obtained by the first manufacturing method by the stringer webs or by connecting the cap of the Y-shaped stringer to a second cap of a second Y-shaped stringer when the Y-shaped stringers comprise caps.

Furthermore, the present invention proposes a manufacturing method of a torsion box of an aircraft e.g., a wing torsion box comprising the manufactured double Y-shaped cross-section spar. The manufactured torsion box can be used for the vertical tailplane "VTP", the horizontal tailplane "HTP", etc.). The proposed torsion box manufacturing method permits the replacement of a conventional spar by the proposed composite material spar, which can be lighter than conventional spars. Furthermore, the number of spars used in a torsion box can be reduced when substituting conventional spars by the double Y-shaped cross-section spar according to the present invention to obtain the same mechanical characteristics.

A first aspect of the present invention refers to a method for manufacturing a Y-shaped stringer made of composite material, the Y-shaped stringer comprises a stringer web having a cross-section in a I-shape, lower flanges a first opened triangular-shaped cross-section structure comprising lower vertices respectively joined to the lower flanges and an upper vertex connected to a first end of the stringer web, wherein the first opened triangular-shaped cross-section structure and the stringer web form a cross-section in a Y-shape, the method comprises placing composite material onto first mold and a second mold that each comprises a molding curvature having an angle *β* = 360º - *α*, wherein *α* is a working angle formed in a joint between the first opened triangular-shaped cross-section structure and the lower flanges, wherein *α* has a value between 100 to 165°, placing composite material onto a third mold, closing the first mold and the second mold with the third mold to obtain a closed mold that contains a Y-shaped preform and curing the Y-shaped preform with an autoclave cycle to obtain the Y-shaped stringer.

In one example, the method further comprises cutting the Y-shaped stringer.

In one example, curing the Y-shaped preform with an autoclave cycle comprises curing the Y-shaped preform at 180 degrees Celsius or less.

In one example, the method further comprises placing a rowing in between the first mold and the second mold.

In one example, the method further comprises obtaining the first mold, the second mold and the third mold with 3D printing. The materials to be used are thermoplastics from the PEI/PEEK/PEKK families due to their good properties at high temperatures and their good resistance.

In one example, the method further comprises establishing the lower flanges in a perpendicular direction to the stringer web with the shape of the first mold, the second mold and the third mold.

In one example, the method further comprises using carbon fiber with thermoset or thermoplastic resin or glass fiber with thermoset or thermoplastic resin as composite material.

In one example, the method further comprises connecting a cap to a second end of the stringer web that provides the stringer web with a cross-section in a T-shape or in a L-shape or in a J-shape.

In one example, the cap comprises a symmetric laminate composed by:
- a first layer comprising composite laminates that wrap the lower flanges the stringer web, wherein a 70% of the total composite laminates from the first layer are oriented at a load angle +/-45°, wherein the load angle is the angle of the load with respect to the Y-shaped stringer reference axis;
- a second layer comprising composite laminates that can be established on top of the first layer wherein a 70% of the total composite laminates from the first layer are oriented at a load angle 0°.
- a third layer comprising composite laminates that can be established on top of the second one, wherein a 70% of the total composite laminates from the third layer are oriented at a load angle +/-45°.

In one example, the method further comprises establishing vertical fins in a parallel direction to the stringer web with the shape of the first mold, the second mold and the third mold.

A second aspect of the present invention refers to the use of the Y-shaped stringer according to the first aspect of the present invention as stiffener for a panel of an aircraft by joining the lower flanges to the panel of the aircraft by cocuring or cobounding.

In a third aspect, the present invention refers to a method for manufacturing a double Y-shaped cross-section spar comprising a spar web, lower spar flanges, upper spar flanges and first cross-section opened triangular-shaped spar structure and a second cross-section opened triangular-shaped spar structure, the method comprising connecting a second end of the stringer web of the Y-shaped stringer to a second stringer web of a second Y-shaped stringer obtained by the method according to claims 1 to 10.

In a fourth aspect, the present invention refers to a method for manufacturing a torsion box for an aircraft comprising a plurality of double Y-shaped cross-section spars obtained by the method according to the previous claim and a first panel and a second panel, the method comprising placing at least the plurality of double Y-shaped cross-section spars in between first molds, wherein the first molds are associated with at least the shape of the spar web, and the lower spar flanges and the upper spar flanges, placing second molds onto the first cross-section opened triangular-shaped spar structure and onto the second cross-section opened triangular-shaped spar structure, placing composite material at least onto the second molds, closing the first molds and the second molds with third molds to obtain a closed mold that contains a torsion box preform, wherein the third molds are associated with at least the shape of the first panel of the torsion box and the shape of the second panel of the torsion box of the aircraft and curing the torsion box preform with an autoclave cycle to obtain the torsion box.

In an example, the method further comprising cutting the torsion box.

In one example, curing the torsion box preform with an autoclave cycle comprises curing the torsion box preform at 180 degrees Celsius or less.

### Brief description of the drawings

For a better understanding of the above explanation and for the sole purpose of providing an example, some non-limiting drawings are included that schematically depict a practical embodiment.
Figure 1 shows a first example of the Y-shaped stringer obtained by the first manufacturing method according to the present invention.
Figure 2 shows a second example of the Y-shaped stringer obtained by the first manufacturing method according to the present invention comprising vertical fins.
Figure 3 shows a third example of the Y-shaped stringer obtained by the first manufacturing method according to the present invention comprising vertical fins and a cap.
Figure 4 shows example of the double Y-shaped cross-section spar obtained by the second manufacturing method according to the present invention.
Figure 5 shows molds used in the first manufacturing method to obtain a Y-shaped stringer according to the present invention.
Figure 6 shows molds used in the third manufacturing method to obtain a torsion box according to the present invention.
Figure 7 shows the Y-shaped stringer (100) according to the present invention used as a stiffener for a panel (1010) of an aircraft.
Figure 8 shows a torsion box obtained by the third manufacturing method according to the present invention comprising a plurality of double Y-shaped cross-section spars.

### Description of a detailed embodiment

The Y-shaped stringer obtained by the first manufacturing method according to the present invention comprise three different parts: an opened triangular-shaped cross-section structure that enhances the behavior to torsional loads, the flanges connected to the opened triangular-shaped cross-section structure that can be configured to be joined to a panel or skin of the aircraft and a slim part or stringer web established in a normal direction to the flanges that increases the momentum of inertia and the structural stiffness of the Y-shaped stringers according to the present invention.

The double Y-shaped cross-section spar obtained by the manufacturing method according to the present invention comprise two Y-shaped stringers connected by the webs of the stringers.

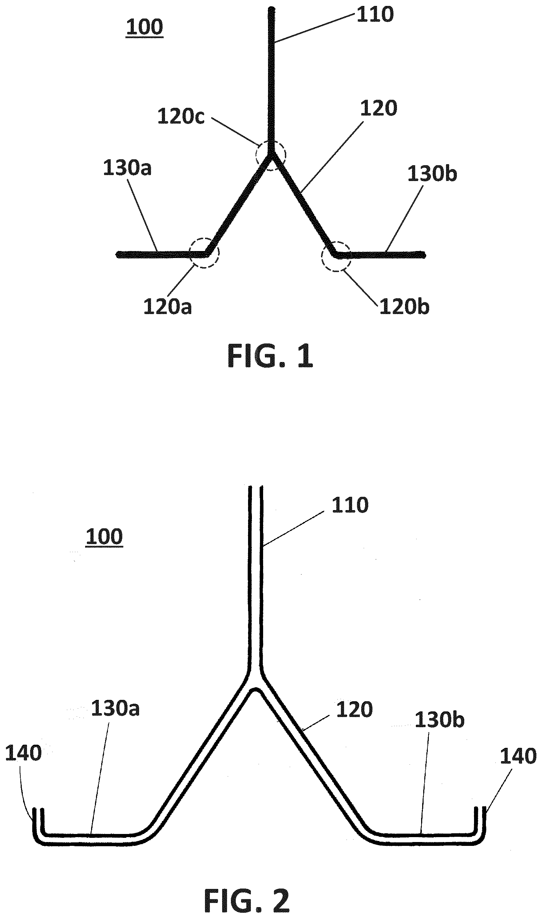

Figure 1 shows a first example of the Y-shaped stringer (100) according to the present invention. The Y-shaped stringer (100) can be made of composite material and can be used as stiffener for a panel of an aircraft. The panel (1010) can be made of composite. The Y-shaped stringer (100) shown in figure 1 comprises a stringer web (110) having cross-section a I-shape, a first opened triangular-shaped cross-section structure (120) that comprises lower vertices (120a, 120b) joined or connected to lower flanges (130a, 130b). In this example, the lower flanges (130a, 130b) are established in a perpendicular or normal direction to the stringer web (110). The lower flanges (130a, 130b) are configured to be connectable to the panel of the aircraft.

Furthermore, the first opened triangular-shaped cross-section structure (120) comprises an upper vertex (120c) connected to the stringer web (110) having a I-shape. As shown in figure 1, the first opened triangular-shaped cross-section structure (120) in connection with the stringer web (110) form a Y-shape.

Figure 2 shows a second example of the Y-shaped stringer (100) according to the present invention. In this example, the Y-shaped stringer (100) comprises vertical fins (140) connected to the lower flanges (130a, 130b) and established in a parallel direction to the stringer web (110). The vertical fins (140) can improve the resistance to buckling and post-buckling and the stiffness of the Y-shaped stringer (100).

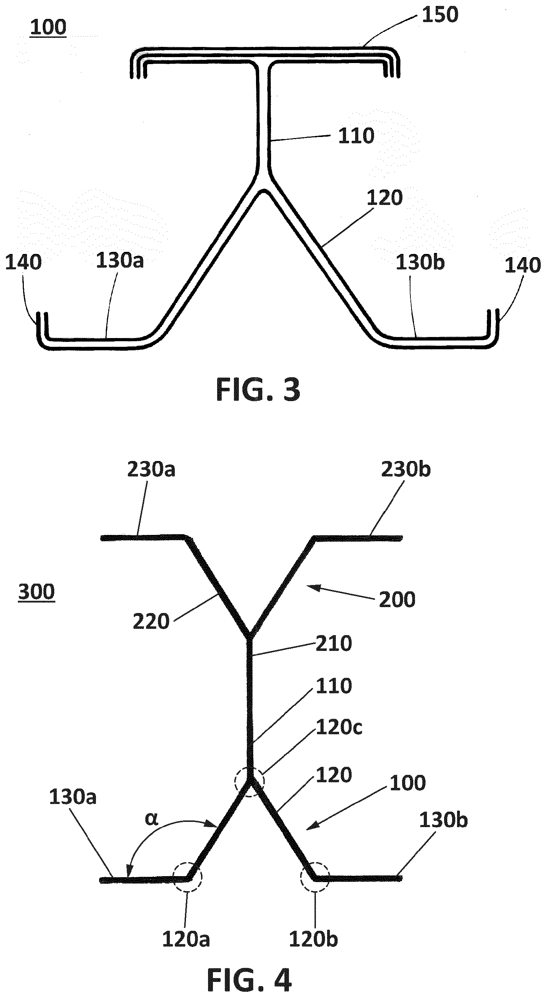

Figure 3 shows a third example of the Y-shaped stringer (100) according to the present invention. The Y-shaped stringer (100) shown in figure 3 comprises all the elements of the example of figure 2 and furthermore it comprises a cap (150) that provides the stringer web (110) with a T-shape.

Composite laminates must be oriented to achieve the best possible properties, to avoid buckling and to prevent warping after manufacturing (the laminate must to be symmetrical and balanced). The improvement of the laminate properties is related to where the fiber angles are oriented. That is, if the load goes in the direction of 0° according to the Y-shaped stringer reference axis, a greater percentage of laminates will be placed at 0° with respect to the Y-shaped stringer reference axis because that is where the laminates will have the best mechanical properties. The total percentage is divided into laminates at 0°, laminates at 90° and laminates at +/-45°. So, as the different parts of the Y-shaped stringer (100) work differently (lower flanges (130a, 130b), stringer web (110) and the cap (150)), each part has to have a greater amount of laminates in the orientation in which it is of interest for the best mechanical response. An example of a symmetrical and balanced composite laminate may be: +45 °,-45 °,0 °,90 °,0 °,0 °,90 °,0 °,-45 °,+45 °, which is also written as (+45,-45,0,90,0 )S).

Graphite fiber-reinforced polymer, CFRP's are made of several layers. Each layer is a "cloth," "ribbon," or "strip" (like a piece of cloth) of carbon fibers. In this "fabric" the fibers can be disordered, woven or mostly oriented in one direction. In general, those that have a main orientation are used, because in this main direction we know that it has resistance to significant loads. Then, when the layers are stacked, each layer can be oriented as desired to adapt the load resistance of the final piece according to the orientations of each of its layers.

The cap (150) can be divided into three stacked layers:
- A first layer comprising composite laminates that wrap the lower flanges (130a, 130b), the stringer web (110) and the cap (150), wherein a 70% of the total composite laminates from the first layer are oriented at a load angle +/-45°, wherein the load angle is the angle of the load with respect to the Y-shaped stringer reference axis;
- A second layer comprising composite laminates that can be established on top of the first layer wherein a 70% of the total composite laminates from the first layer are oriented at a load angle 0°.
- A third layer comprising composite laminates that can be established on top of the second one, wherein a 70% of the total composite laminates from the third layer are oriented at a load angle +/-45°.

Hence, the first and the third layer can comprise a maximum of composite laminates oriented at +/-45°, wherein +/-45° is the angle of the load with respect to the Y-shaped stringer reference axis and with a 70% of the total composite laminates from the first and the third layer (because it is interesting to have more at +/-45° to avoid local and global buckling and due to design rules and laminate theory).

The second layer would have a maximum of 70% of the total composite laminates of the second layer oriented at 0° wherein 0° is the angle of the load with respect to the Y-shaped stringer reference axis, because it is important that the cap have a core with 0° orientation since that would be the orientation of the main load (which would be perpendicular to the plane of the section).

The third example of the Y-shaped stringer (100) is the most complete Y-shaped stringer section that can improve the behavior of the Y-shaped stringer (100) in the main load direction, enhancing the momentum of inertia and the elastic modulus (E), increasing the stiffness of the stringer, and consequently, of the panel.

Figure 4 shows a first example of the double Y-shaped cross-section spar (300) obtained by the manufacturing method according to the present invention. The double Y-shaped cross-section spar (300) can be made by joining the Y-shaped stringer (100) to a second Y-shaped stringer (200) that comprises a stringer web (210), and wherein a second end of the stringer web (110) is connected to the second stringer web (210) of the second Y-shaped stringer (200).

The double Y-shaped cross-section spar (300) comprises a spar web that is obtained by connecting the stringer web (110) and the second stringer web (210) having both webs a cross-section in a I-shape.

The double Y-shaped cross-section spar (300) comprises two parts connected by the spar web, i.e., a lower part corresponding to the Y-shaped stringer (100), and an upper part corresponding to the second Y-shaped stringer (200).

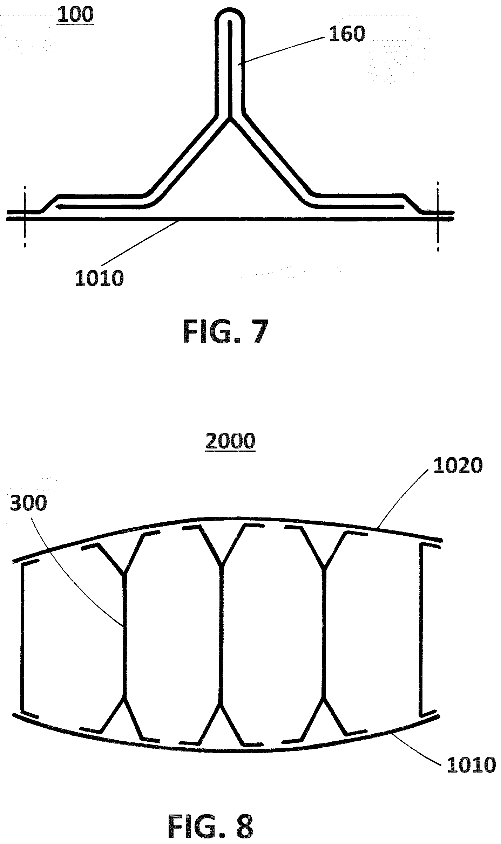

The lower part corresponding to the Y-shaped stringer (100) comprises lower flanges (130a, 130b) that can be configured to be connectable to a first panel (1010) of a torsion box of the aircraft (as shown in figure 8), the first opened triangular-shaped cross-section structure (120) that comprises first and second lower vertices (120a, 120b) respectively joined to the lower flanges (130a, 130b) and an upper vertex (120c) connected to a first end of the stringer web (110).

The upper part corresponding to the second Y-shaped stringer (200) comprises upper flanges (230a, 230b) configured to be connectable to a second panel (1020) of the torsion box of the aircraft, a second opened triangular-shaped cross-section structure (220) joined to upper flanges (230a, 230b) and to the second stringer web (210).

The first opened triangular-shaped cross-section structure (120), the second opened triangular-shaped cross-section structure (220) and the stringer web (110) and the second stringer web (210) form a cross-section in a double Y-shape.

The double Y-shaped cross-section spar (300) the most suitable example according to the present invention for production as this would still have an optimal structural behavior and could easily be mass-produced with a fast prototyped mold using 3D printing techniques.

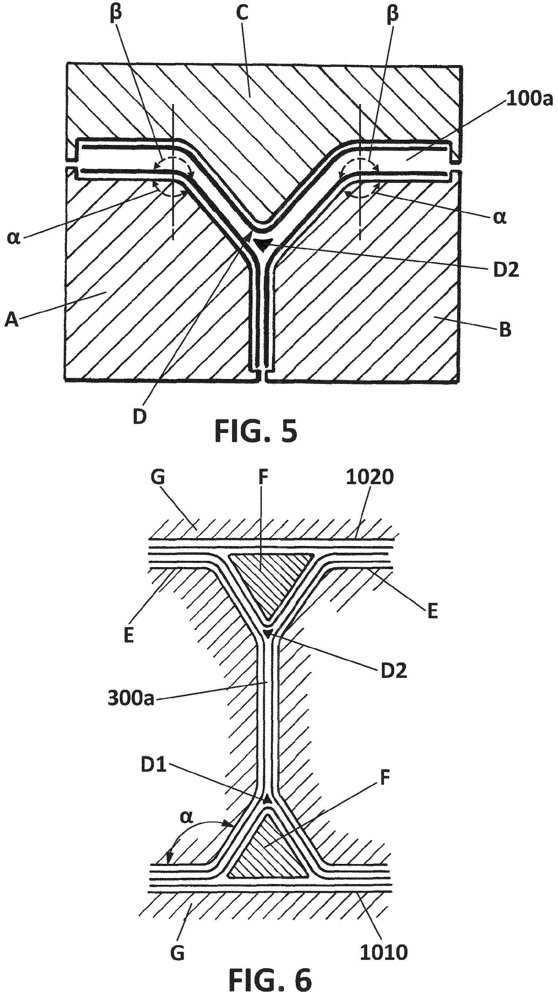

Figure 5 shows molds used in the manufacturing method of the Y-shaped stringer (100) according to the present invention.

Figure 5 shows a first mold (A) and a second mold (B) that comprise a molding curvature (X) having an angle *β* = 360º - *α*, wherein *α* is a working angle formed in a joint between the first opened triangular-shaped cross-section structure (120) and the lower flanges (130a, 130b) of the Y-shaped stringer (100), wherein *α* has a value between 100 to 165°.

The angles *β* and *α* can be adapted to optimize the load transmission but ensuring that no wrinkles are formed during the manufacturing process of the Y-shaped stringer (100). An optimum working angle can be e.g., 135°.

Furthermore, figure 5 shows a third mold (C) that closes the first mold (A) and second mold (B) to obtain a Y-shaped preform (100a). The Y-shaped preform (100a) is composed by laminates and between the laminates a rowing (D2) can be placed to ensure that no voids are created in the joint of the laminates.

The manufacturing process of the Y-shaped stringer (100) can comprise placing composite material onto the first mold (A) and placing composite material onto the second mold (B) that comprise the molding curvature (X) having an angle *β* = 360º-*α*, and placing composite material onto the third mold (C), and closing the first mold (A) and the second mold (B) with the third mold (C) to obtain a closed mold that contains the Y-shaped preform (100a), and curing the Y-shaped preform (100a) with an autoclave cycle to obtain the Y-shaped stringer (100).

Additionally, the method can comprise cutting the Y-shaped stringer (100).

In one example, the cheapest manufacturing option for a Y-shaped stringer (100) and the most suitable option for production would be the stringer without vertical fins (140) and the stringer web (110) with a I-shape without the cap (150). This Y-shaped stringer (100) can have an optimal structural behavior and could easily be mass-produced with a fast prototyped mold using 3D printing techniques.

In a particular example, the manufacturing of Y-shaped stringer (100) comprises the manufacturing of the first mold (A), the second mold (B) and the third mold (C) with 3D printing, a fiber placement process over the first mold (A) and the second mold (B) of pre impregnated fibre or dry fibre that can be infused with resin, the closing of the first mold (A) and the second mold (B) with the third mold (C) conforming the Y-shaped preform (100a), the use of an autoclave cycle at 180° or lower to optimize the in-service temperature of the Y-shaped stringer (100), and a last additional step of cutting the Y-shaped stringer (100).

Figure 6 shows molds used in the manufacturing method of a torsion box (2000) (shown in figure 8) for an aircraft comprising a plurality of double Y-shaped cross-section spars (300) obtained by the method according to the previous claim and a first panel (1010) and a second panel (1020).

The torsion box (2000) comprises a plurality of double Y-shaped cross-section spar (300) obtained with a manufacturing method according to the present invention. The double Y-shaped cross-section spar (300) comprising a spar web, lower spar flanges, upper spar flanges and a first cross-section opened triangular-shaped spar structure and a second cross-section opened triangular-shaped spar structure.

The manufacturing of the torsion box (2000) can comprise placing a plurality of double Y-shaped cross-section spars (300) in between first molds (E), wherein the first molds (E) are associated with at least the shape of the spar web, and the lower spar flanges and the upper spar flanges.

The manufacturing of the torsion box (2000) can further comprise placing second molds (F) onto the first cross-section opened triangular-shaped spar structure and onto the second cross-section opened triangular-shaped spar structure and placing composite material at least onto the second molds (F). Placing the composite material can comprise a fiber placement process over the molds of pre impregnated fiber or dry fiber that can be later be infused with resin.

The manufacturing of the torsion box (2000) can further comprise closing the first molds (E) and the second molds (F) with third molds (G) to obtain a closed mold that contains a torsion box preform (300a), wherein the third molds (G) are associated with at least the shape of the first panel (1010) of the torsion box and the shape of the second panel (1020) of the torsion box of the aircraft, and curing the torsion box preform with an autoclave cycle.

The method further comprising cutting the torsion box (2000).

In the proposed method, curing the torsion box preform (300a) with an autoclave cycle comprises curing the torsion box preform at 180 degrees Celsius or less.

In one example, α is equal to 135°.

The first molds (E) and the second molds (F) conform the spar web. The second molds (F) and the third molds (G) conform the opened triangular-shaped cross-section spar structures and the first panel (1010) of the torsion box (2000) and the second panel (1020) of the torsion box (2000).

The α is variable that can be adapted to optimize the load transmission, but those that ensure that no wrinkles are formed during the manufacturing.

Figure 7 shows the Y-shaped stringer (100) according to the present invention used as a stiffener for the panel (1010) of an aircraft by joining the lower flanges (130a, 130b) of the Y-shaped stringer (100) to the composite panel (1010) of the aircraft as shown in figure 7. The panel (1010) can be a composite panel.

The joining of the lower flanges (130a, 130b) of the Y-shaped stringer (100) to the panel (1010) of the aircraft can comprise in a first alternative cocuring or in a second alternative cobounding.

It is important to notice that this shape still allows the usage of mouseholes (160) without affecting the structural behavior while reducing weight. The mouseholes (160) are holes made in the ribs of the structure of the aircraft to help positioning and assembling the wing's structure. These holes also permit the interconnection of the fuel tanks.

Figure 8 shows an example torsion box (2000) comprising the double Y-shaped cross-section spars (300) according to the present invention. Figure 8 shows a possible arrangement of a wing torsion box that shows the first panel (1010) of the torsion box and the second panel (1020) of the torsion box of the aircraft, a front and a rear spar and a plurality of double Y-shaped cross-section spars (300) that will vary depending on the dimensions of the torsion box (2000).

## Claims

1. Method for manufacturing a Y-shaped stringer (100) made of composite material, the Y-shaped stringer (100) comprising a stringer web (110) having a cross-section in a I-shape, lower flanges (130a, 130b), a first opened triangular-shaped cross-section structure (120) comprising first and second lower vertices (120a, 120b) respectively joined to the lower flanges (130a, 130b) and an upper vertex (120c) connected to a first end of the stringer web (110), wherein the first opened triangular-shaped cross-section structure (120) and the stringer web (110) form a cross-section in a Y-shape, the method comprising:
- placing composite material onto first mold (A) and a second mold (B) that each comprises a molding curvature (X) having an angle *β* = 360º - *α*, wherein α is a working angle formed in a joint between the first opened triangular-shaped cross-section structure (120) and the lower flanges (130a, 130b), wherein *α* has a value between 100 to 165°;
- placing composite material onto a third mold (C);
- closing the first mold (A) and the second mold (B) with the third mold (C) to obtain a closed mold that contains a Y-shaped preform (100a); and
curing the Y-shaped preform (100a) with an autoclave cycle to obtain the Y-shaped stringer (100).

2. The method according to claim 1, further comprising cutting the Y-shaped stringer (100).

3. The method according to claims 1 or 2, wherein curing the Y-shaped preform (100a) with an autoclave cycle comprises curing the Y-shaped preform (100a) at 180 degrees Celsius or less.

4. The method according to claims 1 to 3, further comprising placing a rowing (D1, D2) in between the first mold (A) and the second mold (B).

5. The method according to claims 1 to 4, further comprising:
- obtaining the first mold (A), the second mold (B) and the third mold (C) with 3D printing.

6. The method according to any of the previous claims, further comprising establishing the lower flanges (130a, 130b) in a perpendicular direction to the stringer web (110) with the shape of the first mold (A), the second mold (B) and the third mold (C).

7. The method according to any of the previous claims, further comprising:
- using carbon fiber with thermoset or thermoplastic resin or glass fiber with thermoset or thermoplastic resin as composite material.

8. The method according to the previous claims, further comprising establishing vertical fins (140) in a parallel direction to the stringer web (110) with the shape of the first mold (A), the second mold (B) and the third mold (C).

9. The method according to claims 1 to 7, further comprising connecting a cap (150) to a second end of the stringer web (110) that provides the stringer web (110) with a cross-section in a T-shape or in a L-shape or in a J-shape.

10. The method according to the previous claim, wherein the cap (150) comprises:
- a first layer comprising composite laminates that wrap the lower flanges (130a, 130b), the stringer web (110), wherein a 70% of the total composite laminates from the first layer are oriented at a load angle +/-45°, wherein the load angle is the angle of the load with respect to the Y-shaped stringer reference axis;
- a second layer comprising composite laminates that can be established on top of the first layer wherein a 70% of the total composite laminates of the second layer are oriented at a load angle 0°.
- a third layer comprising composite laminates that can be established on top of the second one, wherein a 70% of the total composite laminates from the third layer are oriented at a load angle +/-45°.

11. Use of the Y-shaped stringer (100) according to any of the preceding claims as stiffener for a panel (1010) of an aircraft by joining the lower flanges (130a, 130b) to the panel (1010) of the aircraft by cocuring or cobounding.

12. Method for manufacturing a double Y-shaped cross-section spar (300) comprising at least a spar web, lower spar flanges, upper spar flanges and a first cross-section opened triangular-shaped spar structure and a second cross-section opened triangular-shaped spar structure, the method comprising:
connecting a second end of the stringer web (110) of a Y-shaped stringer (100) to a second end of a second stringer web (210) of a second Y-shaped stringer (200) each obtained by the method according to claims 1 to 8;
or connecting the cap (150) of the Y-shaped stringer (100) to a second cap of a second Y-shaped stringer (200) each obtained by the method according to claims 8 to 9.

13. Method for manufacturing a torsion box (2000) for an aircraft comprising a plurality of double Y-shaped cross-section spars (300) obtained by the method according to the previous claim and a first panel (1010) and a second panel (1020), the method comprising:
- placing at least the plurality of double Y-shaped cross-section spars (300) in between first molds (E), wherein the first molds (E) are associated with at least the shape of the spar web, and the lower spar flanges and the upper spar flanges;
- placing second molds (F) onto the first cross-section opened triangular-shaped spar structure and onto the second cross-section opened triangular-shaped spar structure;
- placing composite material at least onto the second molds (F);
- closing the first molds (E) and the second molds (F) with third molds (G) to obtain a closed mold that contains a torsion box preform (300a), wherein the third molds (G) are associated with at least the shape of the first panel (1010) of the torsion box (2000) and the shape of the second panel (1020) of the torsion box (2000) of the aircraft,
and
- curing the torsion box preform (300a) with an autoclave cycle to obtain the torsion box (2000).

14. The method according to claim 13, further comprising cutting the torsion box (2000).

15. The method according to claims 13 or 14, wherein curing the torsion box preform with an autoclave cycle comprises curing the torsion box preform at 180 degrees Celsius or less.

## Patentansprüche

1. Verfahren zum Herstellen eines Y-förmigen Stringers (100) aus einem Verbundwerkstoff, wobei der Y-förmige Stringer (100) einen Stringersteg (110), der einen Querschnitt in einer I-Form aufweist, untere Flansche (130a, 130b), eine erste offene dreieckige Querschnittsstruktur (120), die einen ersten und einen zweiten unteren Scheitelpunkt (120a, 120b), die jeweils mit den unteren Flanschen (130a, 130b) zusammengefügt sind, und einen oberen Scheitelpunkt (120c), der mit einem ersten Ende des Stringerstegs (110) verbunden ist, umfasst, wobei die erste offene dreieckige Querschnittsstruktur (120) und der Stringersteg (110) einen Querschnitt in einer Y-Form ausbilden, wobei das Verfahren Folgendes umfasst:
- Platzieren des Verbundwerkstoffs auf einem ersten Formwerkzeug (A) und einem zweiten Formwerkzeug (B), die jeweils eine Formwerkzeugwölbung (X) mit einem Winkel *β* = 360° - α umfassen, wobei α ein Arbeitswinkel ist, der in einer Verbindung zwischen der ersten offenen dreieckigen Querschnittsstruktur (120) und den unteren Flanschen (130a, 130b) ausgebildet ist, wobei α einen Wert zwischen 100 und 165° aufweist;
- Platzieren des Verbundwerkstoffs auf einem dritten Formwerkzeug (C);
- Schließen des ersten Formwerkzeugs (A) und des zweiten Formwerkzeugs (B) mit dem dritten Formwerkzeug (C), um ein geschlossenes Formwerkzeug zu erhalten, das eine Y-förmige Vorform (100a) enthält; und
Aushärten der Y-förmigen Vorform (100a) mit einem Autoklavenzyklus, um den Y-förmigen Stringer (100) zu erhalten.

2. Verfahren nach Anspruch 1, ferner umfassend Schneiden des Y-förmigen Stringers (100).

3. Verfahren nach Anspruch 1 oder 2, wobei das Aushärten der Y-förmigen Vorform (100a) mit einem Autoklavenzyklus umfasst: Aushärten der Y-förmigen Vorform (100a) bei 180 Grad Celsius oder weniger.

4. Verfahren nach den Ansprüchen 1 bis 3, ferner umfassend Platzieren eines Rowings (D1, D2) zwischen dem ersten Formwerkzeug (A) und dem zweiten Formwerkzeug (B).

5. Verfahren nach den Ansprüchen 1 bis 4, ferner umfassend:
- Erhalten des ersten Formwerkzeugs (A), des zweiten Formwerkzeugs (B) und des dritten Formwerkzeugs (C) mit 3D-Druck.

6. Verfahren nach einem der vorhergehenden Ansprüche, ferner umfassend Errichten der unteren Flansche (130a, 130b) in einer senkrechten Richtung zu dem Stringersteg (110) mit der Form des ersten Formwerkzeugs (A), des zweiten Formwerkzeugs (B) und des dritten Formwerkzeugs (C).

7. Verfahren nach einem der vorhergehenden Ansprüche, ferner umfassend:
- Verwenden von Kohlefaser mit Duroplast-Harz oder thermoplastischem Harz oder Glasfaser mit Duroplast-Harz oder thermoplastischem Harz als Verbundwerkstoff.

8. Verfahren nach dem vorhergehenden Anspruch, ferner umfassend: Errichten von vertikalen Rippen (140) in einer parallelen Richtung zu dem Stringersteg (110) mit der Form des ersten Formwerkzeugs (A), des zweiten Formwerkzeugs (B) und des dritten Formwerkzeugs (C).

9. Verfahren nach den Ansprüchen 1 bis 7, ferner umfassend: Verbinden einer Kappe (150) mit einem zweiten Ende des Stringerstegs (110), die dem Stringersteg (110) einen Querschnitt in einer T-Form oder in einer L-Form oder in einer J-Form bereitstellt.

10. Verfahren nach dem vorhergehenden Anspruch, wobei die Kappe (150) Folgendes umfasst:
- eine erste Schicht, die Verbundlaminate umfasst, die die unteren Flansche (130a, 130b) und den Stringersteg (110) umwickeln, wobei 70 % der gesamten Verbundlaminate von der ersten Schicht in einem Lastwinkel von +/- 45° ausgerichtet sind, wobei der Lastwinkel der Winkel der Last in Bezug auf die Referenzachse des Y-förmigen Stringers ist;
- eine zweite Schicht, die Verbundlaminate umfasst, die oben auf der ersten Schicht errichtet werden können, wobei 70 % der gesamten Verbundlaminate der zweiten Schicht in einem Lastwinkel von 0° ausgerichtet sind.
- eine dritte Schicht, die Verbundlaminate umfasst, die oben auf der zweiten errichtet werden können, wobei 70 % der gesamten Verbundlaminate von der dritten Schicht in einem Lastwinkel von +/- 45° ausgerichtet sind.

11. Verwendung des Y-förmigen Stringers (100) nach einem der vorhergehenden Ansprüche als Versteifung für ein Panel (1010) eines Flugzeugs durch Zusammenfügen der unteren Flansche (130a, 130b) und des Panels (1010) des Flugzeugs durch gleichzeitiges Aushärten oder gleichzeitiges Verkleben.

12. Verfahren zum Herstellen eines Doppel-Y-förmigen Querschnittsholms (300), umfassend mindestens einen Holmsteg, untere Holmflansche, obere Holmflansche und eine erste offene dreieckige Querschnittsholmstruktur und eine zweite offene dreieckige Querschnittsholmstruktur, wobei das Verfahren Folgendes umfasst:
Verbinden eines zweiten Endes des Stringerstegs (110) eines Y-förmigen Stringers (100) mit einem zweiten Ende eines zweiten Stringerstegs (210) eines zweiten Y-förmigen Stringers (200), die jeweils mit den Verfahren nach den Ansprüchen 1 bis 8 erhalten werden;
oder Verbinden der Kappe (150) des Y-förmigen Stringers (100) mit einer zweiten Kappe eines zweiten Y-förmigen Stringers (200), die jeweils mit dem Verfahren nach den Ansprüchen 8 bis 9 erhalten werden.

13. Verfahren zum Herstellen eines Torsionskastens (2000) für ein Flugzeug, umfassend eine Mehrzahl von Doppel-Y-förmigen Querschnittsholmen (300), die durch das Verfahren nach dem vorhergehenden Anspruch erhalten werden, und ein erstes Panel (1010) und ein zweites Panel (1020), wobei das Verfahren Folgendes umfasst:
- Platzieren von mindestens der Mehrzahl von Doppel-Y-förmigen Querschnittsholmen (300) zwischen ersten Formwerkzeugen (E), wobei die ersten Formwerkzeuge (E) mindestens mit der Form des Holmstegs assoziiert sind, und den unteren Holmflanschen und den oberen Holmflanschen;
- Platzieren von zweiten Formwerkzeugen (F) auf der ersten offenen dreieckigen Querschnittsholmstruktur und auf der zweiten offenen dreieckigen Querschnittsholmstruktur;
- Platzieren des Verbundwerkstoffs mindestens auf den zweiten Formwerkzeugen (F);
- Schließen der ersten Formwerkzeuge (E) und der zweiten Formwerkzeuge (F) mit dritten Formwerkzeugen (G), um ein geschlossenes Formwerkzeug zu erhalten, das eine Torsionskastenvorform (300a) enthält, wobei die dritten Formwerkzeuge (G) mit mindestens der Form des ersten Panels (1010) des Torsionskastens (2000) und der Form des zweiten Panels (1020) des Torsionskastens (2000) des Flugzeugs assoziiert sind,
und
- Aushärten der Torsionskastenvorform (300a) mit einem Autoklavenzyklus, um den Torsionskasten (2000) zu erhalten.

14. Verfahren nach Anspruch 13, ferner umfassend Schneiden des Torsionskastens (2000).

15. Verfahren nach Anspruch 13 oder 14, wobei das Aushärten der Torsionskastenvorform mit einem Autoklavenzyklus umfasst Aushärten der Torsionskastenvorform bei 180 Grad Celsius oder weniger umfasst.

## Revendications

1. Procédé de fabrication d'une lisse (100) en forme de Y composée d'un matériau composite, la lisse (100) en forme de Y comprenant une âme (110) de lisse présentant une section transversale en une forme de I, des brides inférieures (130a, 130b), une première structure de section transversale (120) de forme triangulaire ouverte comprenant des premier et deuxième sommets inférieurs (120a, 120b) respectivement reliés aux brides inférieures (130a, 130b) et un sommet supérieur (120c) relié à une première extrémité de l'âme (110) de lisse, dans lequel la première structure de section transversale (120) de forme triangulaire ouverte et l'âme (110) de lisse forment une section transversale en une forme de Y, le procédé comprenant :
- la mise en place d'un matériau composite sur un premier moule (A) et un deuxième moule (B) qui comprennent chacun une courbure de moulage (X) ayant un angle *β* = 360° - *α*, dans lequel *α* est un angle de travail formé dans un raccord entre la première structure de section transversale (120) de forme triangulaire ouverte et les brides inférieures (130a, 130b), dans lequel *α* a une valeur allant de 100 à 165° ;
- la mise en place d'un matériau composite sur un troisième moule (C) ;
- la fermeture du premier moule (A) et du deuxième moule (B) avec le troisième moule (C) afin d'obtenir un moule fermé qui contient une préforme (100a) en forme de Y ; et
- le durcissement de la préforme (100a) en forme de Y avec un cycle d'autoclave afin d'obtenir la lisse (100) en forme de Y.

2. Procédé selon la revendication 1, comprenant en outre la découpe de la lisse (100) en forme de Y.

3. Procédé selon la revendication 1 ou 2, dans lequel le durcissement de la préforme (100a) en forme de Y avec un cycle d'autoclave comprend le durcissement de la préforme (100a) en forme de Y à 180 degrés Celsius ou moins.

4. Procédé selon l'une quelconque des revendications 1 à 3, comprenant en outre la mise en place d'une mèche de fibres (D1, D2) entre le premier moule (A) et le deuxième moule (B).

5. Procédé selon l'une quelconque des revendications 1 à 4, comprenant en outre :
- l'obtention du premier moule (A), du deuxième moule (B) et du troisième moule (C) par impression 3D.

6. Procédé selon l'une quelconque des revendications précédentes, comprenant en outre l'établissement des brides inférieures (130a, 130b) dans une direction perpendiculaire à l'âme (110) de lisse avec la forme du premier moule (A), du deuxième moule (B) et du troisième moule (C).

7. Procédé selon l'une quelconque des revendications précédentes, comprenant en outre :
- l'utilisation de fibre de carbone avec une fibre de verre ou une résine thermodurcie ou thermoplastique avec une résine thermodurcie ou thermoplastique comme matériau composite.

8. Procédé selon l'une quelconque des revendications précédentes, comprenant en outre l'établissement d'ailettes verticales (140) dans une direction parallèle à l'âme (110) de lisse avec la forme du premier moule (A), du deuxième moule (B) et du troisième moule (C).

9. Procédé selon l'une quelconque des revendications 1 à 7, comprenant en outre la liaison d'un capuchon (150) à une seconde extrémité de l'âme (110) de lisse qui donne à l'âme (110) de lisse une section transversale en une forme de T ou en une forme de L ou en une forme de J.

10. Procédé selon la revendication précédente, dans lequel le capuchon (150) comprend :
- une première couche comprenant des stratifiés composites qui enveloppent les brides inférieures (130a, 130b), l'âme (110) de lisse, dans lequel 70 % du total des stratifiés composites de la première couche sont orientés à un angle de charge de +/- 45°, dans lequel l'angle de charge est l'angle de la charge par rapport à l'axe de référence de la lisse en forme de Y ;
- une deuxième couche comprenant des stratifiés composites qui peut être établie sur la première couche, dans lequel 70 % du total des stratifiés composites de la deuxième couche sont orientés à un angle de charge de 0° ;
- une troisième couche comprenant des stratifiés composites qui peut être établie sur la deuxième couche, dans lequel 70 % du total des stratifiés composites de la troisième couche sont orientés à un angle de charge de +/- 45°.

11. Utilisation de la lisse (100) en forme de Y selon l'une quelconque des revendications précédentes en tant que raidisseur pour un panneau (1010) d'un aéronef en reliant les brides inférieures (130a, 130b) au panneau (1010) de l'aéronef par co-durcissement ou co-liaison.

12. Procédé de fabrication d'un longeron (300) de section transversale en forme de double Y comprenant au moins une âme de longeron, des brides de longeron inférieures, des brides de longeron supérieures et une première structure de longeron de forme triangulaire ouverte de section transversale et une seconde structure de longeron de forme triangulaire ouverte de section transversale, le procédé comprenant :
la liaison d'une seconde extrémité de l'âme (110) de lisse de la lisse (100) en forme de Y à une seconde extrémité d'une seconde âme (210) de lisse d'une seconde lisse (200) en forme de Y, chacune obtenue par le procédé selon les revendications 1 à 8 ;
ou la liaison du capuchon (150) de la lisse (100) en forme de Y à un second capuchon d'une seconde lisse (200) en forme de Y, chacun obtenu par le procédé selon les revendications 8 à 9.

13. Procédé de fabrication d'un caisson de torsion (2000) pour un aéronef comprenant une pluralité de longerons (300) de section transversale en forme de double Y obtenus par le procédé selon la revendication précédente et un premier panneau (1010) et un second panneau (1020), le procédé comprenant :
- la mise en place d'au moins la pluralité de longerons (300) de section transversale en forme de double Y entre des premiers moules (E), dans lequel les premiers moules (E) sont associés à au moins la forme de l'âme de longeron, et des brides de longeron inférieures et des brides de longeron supérieures ;
- la mise en place de deuxièmes moules (F) sur la première structure de longeron de forme triangulaire ouverte de section transversale et sur la seconde structure de longeron de forme triangulaire ouverte de section transversale ;
- la mise en place d'un matériau composite au moins sur les deuxièmes moules (F) ;
- la fermeture des premiers moules (E) et des deuxièmes moules (F) avec des troisièmes moules (G) afin d'obtenir un moule fermé qui contient une préforme (300a) de caisson de torsion, dans lequel les troisièmes moules (G) sont associés à au moins la forme du premier panneau (1010) du caisson de torsion (2000) et la forme du second panneau (1020) du caisson de torsion (2000) de l'aéronef, et
- le durcissement de la préforme (300a) de caisson de torsion avec un cycle d'autoclave afin d'obtenir le caisson de torsion (2000).

14. Procédé selon la revendication 13, comprenant en outre la découpe du caisson de torsion (2000).

15. Procédé selon la revendication 13 ou 14, dans lequel le durcissement de la préforme de caisson de torsion avec un cycle d'autoclave comprend le durcissement de la préforme de caisson de torsion à 180 degrés Celsius ou moins.
